# EUROPEAN PATENT SPECIFICATION

(11) **EP 3 293 561 B1**
(45) Date of publication and mention of the grant of the patent: **31.03.2021**
(21) Application number: 16188067.9
(22) Date of filing: 09.09.2016
(51) Int. Cl.: G02B 26/08, G01N 15/02, G02F 1/11, G02F 1/33

(54) **LIGHT BEAM MODULATION UNIT FOR A LIGHT SCATTERING DEVICE AND LIGHT SCATTERING DEVICE**
LICHTSTRAHLMODULATION FÜR EINE LICHTSTREUUNGSVORRICHTUNG UND LICHTSTREUUNGSVORRICHTUNG
UNITÉ DE MODULATION DE FAISCEAU LUMINEUX POUR UN DISPOSITIF DE DIFFUSION DE LUMIÈRE ET DISPOSITIF DE DIFFUSION DE LUMIÈRE

(43) Date of publication of application: 14.03.2018
(73) Proprietor: LS Instruments AG, 1700 Fribourg (CH)
(72) Inventor: KAMBLY, Nils, 1630 Bulle (CH); VACCARO, Andrea, 1782 La Corbaz (CH)
(74) Representative: P&TS SA (AG, Ltd.)

(56) References cited:
- EP-A1- 2 365 313
- EP-A1- 2 647 977
- WO-A1-2015/200271
- US-A- 5 007 737
- US-A- 5 815 277
- US-A1- 2007 201 123

## Description

The invention relates to a light scattering system.

US 5 815 277 discloses a light beam modulation unit suitable for a light scattering device comprising: a single light input, an acousto-optical modulator for splitting a light beam received from the light input into a 0-order diffracted and 1^{st}-order diffracted beam, wherein the acousto-optical modulator is arranged at a first distance from the light input, wherein the first light output is arranged at a first angle with respect to the incoming light beam and at a second distance along a first propagation path of the 0-order diffracted beam from the acousto-optical modulator, wherein the second light output is arranged at a second angle with respect to the incoming light beam and at a third distance along a second propagation path of the diffracted beam from the acousto-optical modulator, and a controller for controlling the acousto-optical modulator such that a 0-order diffracted beam with a first intensity or a 1^{st}-order diffracted beam with a second intensity is generated independently or that a 0-order diffracted beam with a first intensity and a 1^{st}-order diffracted beam with a second intensity are generated as alternating beams or as simultaneous beams.

US 2007/0201123 A1 discloses a method of imaging a specimen comprising the steps of: creating a pulsed infrared light beam; utilizing four acoustic waves transmitted across at least one acousto-optic deflector to independently control two-dimensional collimation and two-dimensional lateral positioning of the light beam; and directing the light beam to the specimen.

WO 2015/200271 A1 describes a beam-parameter adjustment system and focusing system for receiving and altering a spatial power distribution of a radiation beam from a beam source and focusing the radiation with the altered spatial power distribution onto an end face of an optical fiber. The system comprises an acousto-optic element for receiving the radiation beam and diffracting the radiation beam into a plurality of different orders; a first acoustic transducer for generating sound waves within the acousto-optic element, thereby altering an index of refraction of at least a portion of the acousto-optic element in a periodic pattern; focusing optics for receiving the plurality of orders from the acousto-optic element and focusing the orders on the end face; and a controller for controlling the first acoustic transducer and/or the acousto-optic element to achieve a target altered spatial power distribution on the end face.

EP 2 365 313 A1 discloses a device for cross-correlation dynamic light scattering. The device comprises at least one laser, at least one shutter comprising a single acousto-optic modulator, that provides the function of beam splitting and intensity modulation, one scattering cell, two photon detectors for detecting each one of the laser beams passing through the scattering cell and a subsequent photon counting hardware as well as cross-correlation software or hardware. The acousto-optic modulator is switched on and off for alternately generating a transmitted or a first order diffracted beam.

The disclosed device does not allow for switching easily between different measurement configurations as auto-correlation, cross-correlation and modulated cross-correlation configuration. Such measurements have to be done in different devices.

The object of the present invention is to reduce the disadvantages of the state of the art. In particular a user friendly and multifunctional light scattering system should be proposed.

This object is solved by claim 1. Embodiments of the present invention result from claims 2 to 16.

The light scattering system according to the invention comprises a light beam modulation unit for a light scattering device, comprising:
A single light input,
an acousto-optical modulator for splitting a light beam received from the light input into a 0-order diffracted and a 1^{st}-order diffracted beam, wherein the acousto-optical modulator is arranged at a first distance from the light input,
wherein the first light output is arranged at a first angle with respect to the incoming light beam and at a second distance along a first propagation path of the 0-order diffracted beam from the acousto-optical modulator,
wherein the second light output is arranged at a second angle with respect to the incoming light beam and at a third distance along a second propagation path of the diffracted beam from the acousto-optical modulator,
and a controller for controlling the acousto-optical modulator such that a 0-order diffracted beam with a first intensity or a 1^{st}-order diffracted beam with a second intensity is generated independently or that a 0-order diffracted beam with a first intensity and a 1^{st}-order diffracted beam with a second intensity are generated as alternating beams or as simultaneous beams.

An acousto-optical modulator is an optical device, that may be stimulated by an acoustic wave in order to form a diffraction grating for a light beam.

The light beam is preferably a laser beam within the visible range, near IR-range or UV-range at the light input. The acousto-optical modulator maybe controlled by a controller to transmit the beam without diffraction. The transmitted beam is equal to a 0-order diffracted beam. The 0-order diffracted beam further propagates towards the first light output.

The acousto-optical modulator may be controlled in a manner to generate a 1^{st}-order diffracted beam. The 1^{st}-order diffracted beam propagates towards the second light output.

By the controller the acousto-optical modulator may be controlled in one of the following operation modes:
a) Only a 0-order diffracted beam is generated by transmitting the incident beam through the acousto-optical modulator.
b) Nearly only a 1^{st}-order diffracted beam is generated, when the acousto-optical modulator is stimulated to form an optical grating for diffracting the incident beam.
c) A 0-order diffracted beam and a 1^{st}-order diffracted beam are generated simultaneously, wherein the first and the second intensity are both different from 0% of the incident beam intensity, wherein the sum of first and second intensities is above 50%, preferably above 80%, preferably above 90% of the incident beam intensity. Preferably the first and the second intensities are equal.
d) The acousto-optical modulator switches at a set frequency between the 0-order diffracted beam having the first intensity and the 1^{st}-order diffracted beam having the second intensity to generate alternately 0-order and 1^{st}-order diffracted beams, wherein first and second intensities are above 50%, preferably above 80%, preferably above 90% of the incident beam intensity.

The light beam modulation unit according to the present invention may be used to output one or two diffracted light beams just by setting the controller to different working conditions. This allows a fast switching between the operation modes a)-d).

In a preferred embodiment the light beam modulation unit further comprises a first deflection mirror, which is suitable and arranged to deflect one of the diffracted beams either to the first or to the second light output, wherein the first deflection mirror is preferably selected from the following group: pick-off mirror, knife-edge mirror or D-shape mirror.

The first deflection mirror is arranged within the propagation path of either the 0-order diffracted beam or the 1^{st}-order diffracted beam in order to set the position of the first light output and the second light output. For example, the first deflection mirror may be arranged such, that one of the light outputs is arranged at an angle of 90 degree with respect to the incoming light beam. Preferably the first deflection mirror is arranged such, that it deflects one of the diffracted beams completely, while it does not influence the propagation path of the other diffracted beam. In addition, the first deflection mirror is preferably arranged such that the deflected diffracted beam and the other diffracted beam propagate in different planes. A mirror having at least one wedge shape may be used in order to reduce the size of the light beam modulation unit.

A D-shaped mirror is a mirror with a convex back-side. The use of a D-shaped mirror makes it possible to manufacture a light beam modulation unit with relatively small size.

In a preferred embodiment the first deflection mirror and the acousto-optical modulator are arranged and the acousto-optical modulator is controlled in such a way, that the 0-order diffracted beam is directed to the first light output and the 1^{st}-order diffracted beam is directed to the first deflection mirror and further directed to the second light output.

In a second embodiment the light beam modulation unit further comprises a second deflection mirror to deflect the other of the diffracted beams to the other light output. In this embodiment light input and both light outputs are arranged at the same side of the light beam modulation unit or at sides facing each other, for example.

The acousto-optical modulator is preferably suitable to generate alternating diffracted beams with a frequency of 1 Hz to 500 MHz, preferably with a frequency of 1 kHz to 50 MHz, preferably with a frequency of 100 kHz to 10 MHz.

Preferably, the light input comprises a first light focusing device having a first focal length, the first light output comprises a second light focusing device having a second focal length, and the second light output comprises a third light focusing device having a third focal length, wherein the first distance is about the first focal length, the second distance is about the second focal length, and the third distance is about the third focal length.

In this embodiment the incoming light beam is focused into the acousto-optical modulator. The focused incident beam is diffracted within the acousto-optical modulator to a 0-order diffracted beam and/or a 1^{st}-order diffracted beam. Both, 0-order diffracted beam and 1^{st}-order diffracted beam are diverging beams propagating to the first and the second light output, respectively. At the first and the second light output, respectively, the diffracted beams are transformed to collimated or nearly collimated beams by the second and the third focusing device, respectively.

The term "distance is about the focal length" means a distance within a range of 10% of the focal length. The use of the focusing device allows to increase the switching frequency of the acousto-optical modulator, f.e. by a factor of at least 10.

In a preferred embodiment the light input comprises a first optical fiber and a first light focusing device having a first focal length and focusing into the first optical fiber, the first light output comprises a second optical fiber and a second light focusing device having a second focal length and focusing into the second optical fiber, and the second light output comprises a third optical fiber and a third light focusing device having a third focal length focusing into the third optical fiber. By optical fibers it is possible to guide an incoming beam as well as outgoing beams in a desired direction.

The incoming light beam is preferably a laser beam of a wavelength between 300 and 800 nm, more preferred between 500 and 800 nm. This corresponds to a green or a red laser beam.

A filter wheel is preferably positioned between the light input and the acousto-optic modulator, to filter and attenuate the incoming light beam. Additionally a device for monitoring the beam power may be positioned between the light input and the acousto-optic modulator to monitor the beam power of the incoming light beam.

In a preferred embodiment the first, second and third focal length are equal. In this case light input as well as both light outputs may comprise optical fibers with light focusing devices fused to each of the fibers.

In one embodiment the light input as well as the first light output and the second light output may be adjusted for aligning the beam within the light beam modulation unit. For example each of the light input and both light outputs may comprise an X-Y-tilt-stage or an X-Y-Z-stage. Both kind of stages allow to align in particular a focusing device with respect to 3 orthogonal directions.

In a preferred embodiment the light beam modulation unit further comprises a third mirror and a third light output, wherein the third mirror is suitable to be moved to an inserted position between the light input and the acousto-optical modulator, where the third mirror deflects the light beam to the third light output, and a retracted position, where the third mirror does not intersect the light beam. An insertion and retraction is preferably controllable by the controller.

According to the present invention the light scattering system further comprises:
A single light source, wherein the light source is a laser,
wherein the light beam modulation unit receives a light beam from the light source,
a scattering cell for holding a sample, the scattering cell receiving one or two of the diffracted beams emitted by the single beam modulation unit,
a pair of detectors to detect light within the scattering cell, wherein the pair of detectors is arranged such, that one of the detectors receives scattered light created by one of the diffracted beams with a certain scattering vector and the other detector receives light created by the other of the diffracted beams with the same scattering vector, and
an analyzer to receive a signal from each detector, wherein the analyzer is suitable to perform an auto-correlation of a single signal or cross-correlation of a pair of signals.

In the proposed scattering system a light beam is created by the light source being a laser. The light beam enters the light beam modulation unit. As described above within the light beam modulation unit either a 0-order or a 1^{st}-order diffracted beam is generated. The diffracted beams may be generated simultaneously or alternately. From the light beam modulation unit the diffracted beam/s is/are guided towards the scattering cell. Preferably both diffracted beams are focused by a fourth focusing device arranged between the light beam modulation unit and the scattering cell into the same volume of the scattering cell. If the light beam modulation unit comprises a third light output, the light beam from the third light output is guided to the same volume of the scattering cell, too. Light is scattered within the scattering cell.

For the detection of the scattered light a pair of detectors is provided, wherein one of the detectors is arranged to receive light from scattering events of the 0-order diffracted beam and the other one to receive light from scattering events of the 1^{st}-order diffracted beam. Both detectors are arranged to detect scattered light with the same scattering vector. The pair of detectors may be arranged on a circumference of the scattering cell. Between the scattering cell and the pair of detectors a fifth focusing device may be arranged. In one embodiment the pair of detectors may be arranged to receive incoming light not only by two but for example by three entrances, for example three optical fibers. A separate detector for a third light entrance might be provided, but is optional.

The analyzer receives a signal from each detector. When the light beam modulation unit emits one diffracted beam, the analyzer is suitable to perform an auto-correlation on the signal. In this case the detector detects signals arising from single and multiple scattering events within the scattering cell.

If the light beam modulation unit emits two diffracted beams simultaneously, a signal from both detectors is received by the analyzer. A cross-correlation of both signals may be performed in the analyzer.

If the light beam modulation unit emits alternately the 0-order and the 1^{st}-order diffracted beams, a signal from each detector may be received alternately by the analyzer. The light scattering system may be used for modulated cross-correlation dynamic light scattering.

The proposed light scattering system according to the present invention may be used for the mentioned different measurements by simple electronically switching. Therefore, it is possible to gather different information from a sample by auto-correlation, cross-correlation and modulated cross-correlation without a mechanical change in the measurement setup or mounting the sample to different scattering systems, which may destroy or change delicate samples. In addition, by the use of the proposed light beam modulation unit in the light scattering system the switching frequency between the diffracted beams might be increased. An increase of the switching frequency leads to a decrease of the cut-off time of the correlation function. With a decrease of the cut-off time of the correlation function the measurement of smaller particle sizes is possible and a higher measurement accuracy is possible.

In one embodiment the light source is coupled by a first optical fiber to the light beam modulation unit. The first and the second light output are coupled by a second and a third optical fiber to the scattering cell. This allows a more flexible arrangement of the components of the light scattering system.

Preferably the light beam modulation unit is controllable to generate and emit only the 0-order diffracted beam to the scattering cell. Additionally or alternatively it may be controlled to generate and emit the 1^{st}-order diffracted beam. The light beam modulation unit may be controlled to generate and emit the 0-order diffracted beam and the 1^{st}-order diffracted beam with equal intensity.

In an preferred embodiment the light beam modulation unit is controllable to generate and emit alternating the 0-order diffracted beam and the 1^{st}-order diffracted beam with a frequency of 1 Hz to 500 MHz, preferably with a frequency of 1 kHz to 50 MHz, preferably with a frequency of 100 kHz to 10 MHz.

Further, according to the invention, the analyzer and the controller are connected to each other for transmitting information including information regarding an operation mode of the light beam modulation unit and/or information regarding a switching frequency between the diffracted beams. According to an alternative embodiment an output signal of the controller may contain information about the operation mode of the acousto-optical modulator, the switching frequency etc. The output signal of the controller may therefore be used to automatically switch the analyzer to alternatively perform an auto-correlation, a cross-correlation or a modulated cross-correlation of the signals detected by the detector and to adapt a time scale for modulated cross-correlation to the switching frequency in case of modulated cross-correlation.

In a further alternative embodiment the controller and the analyzer are included in a further controller unit having a single input unit to set the operation mode of the acousto-optical modulator, the switching frequency and to set at the same time the analyzer to auto-correlation, cross-correlation or modulated cross-correlation, respectively, and to adapt a time scale for modulated cross-correlation to the switching frequency.

Additionally a beam power monitor output signal from the beam power monitor can be fed to the analyzer, which allows for example to relate the detected signal intensity with the incoming beam intensity and allows to measure absorption of the beam.

Preferred embodiments of the invention will now be explained with reference to the following figures.
Fig. 1 shows a first embodiment of a light beam modulation unit,
Fig. 2 shows a second embodiment of the light beam modulation unit,
Fig. 3 shows a third embodiment of the light beam modulation unit,
Fig. 4 shows a fourth embodiment of the light beam modulation unit,
Fig. 5 shows a first embodiment of a light scattering system and
Fig. 6 shows a second embodiment of a light scattering system.

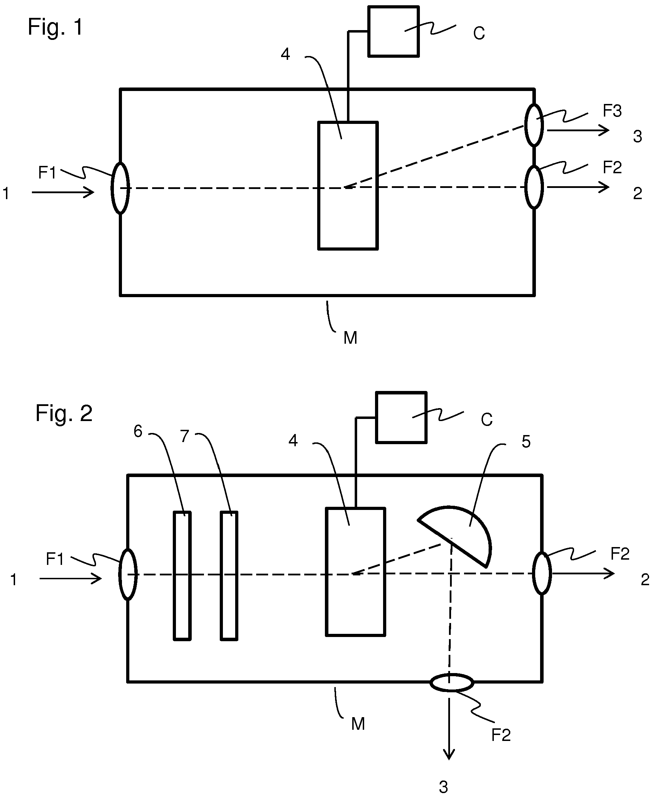

Fig. 1 shows the light beam modulation unit M. A light input is designated with reference number 1. The light input 1 comprises preferably a first light focusing device F1. A light beam enters the light beam modulation unit M through the light input 1 and is focused by the first light focusing device F1 on the acousto-optical modulator 4. The acousto-optical modulator 4 is controlled by controller C.

The acousto-optical modulator 4 may transmit the incident beam in order to generate the 0-order diffracted beam. If the acousto-optical modulator is in an excited state, an optical grating forms that diffracts the incident beam either into a 1^{st}-order diffracted beam or a 0-order diffracted beam and a 1^{st}-order diffracted beam depending on the orientation of the optical grating toward the incident beam as well as depending on the excitation power of the acousto-optical modulator 4. The first intensity of the 0-order diffracted beam and the second intensity of the 1^{st}-order diffracted beam may be changed by changing the excitation power of the acousto-optical modulator 4. If the acousto-optical modulator is switched between a non-excited and an excited state alternately a 0-order diffracted beam and a 1^{st}-order diffracted beam is generated. If the incident beam to the acousto-optical modulator 4 is a convergent beam, 0-order and 1^{st}-order diffracted beams exit the acousto-optical modulator 4 as diverging beams.

In the embodiment shown in Fig. 1, the 0-order diffracted beam propagates from the acousto-optical modulator 4 towards the first light output 2, which preferably comprises a second light focusing device F2. By the second light focusing device F2 a collimated beam is formed.

The 1^{st}-order diffracted beam propagates from the acousto-optical modulator 4 towards the second light output 3, which preferably comprises a third light focusing device F3. By the third light focusing device F3 a collimated beam is formed.

Fig. 2 shows a second embodiment of the light beam modulation unit. In this embodiment the light beam may be additionally filtered with a filter 6 on the propagation path of the light between the light input 1 and the acousto-optical modulator 4. Preferably, a beam power monitor 7 is arranged as well in between the light input 1 and the acousto-optical modulator 4 in order to monitor the intensity of the laser beam.

The 0-order diffracted beam propagates from the acousto-optical modulator 4 towards the first light output 2, which preferably comprises a second light focusing device F2. By the second light focusing device F2 a collimated beam is formed.

The ^{st}-order diffracted beam propagates from the acousto-optical modulator 4 towards the first deflection mirror 5, where it is deflected towards the second light output 3, which preferably comprises a third light focusing device F3. Preferably the 1^{st}-order diffracted beam propagates in a different plane from the 0-order diffracted beam to avoid an intersection of the two diffracted beams. The 1^{st}-order diffracted beam leaving the acousto-optical modulator 4 is as well a diverging beam, which is formed again into collimated beam by the third light focusing device F3. In a preferred embodiment the first, second and third focal length of the first F1, second F2 and third light focusing devices F3 are equal, which means that the acousto-optical modulator 4 is arranged in the middle of the light beam modulation M unit in an x-direction. In this embodiment the first angle is an angle of 0 degree, and the second angle is an angle of 90 degree.

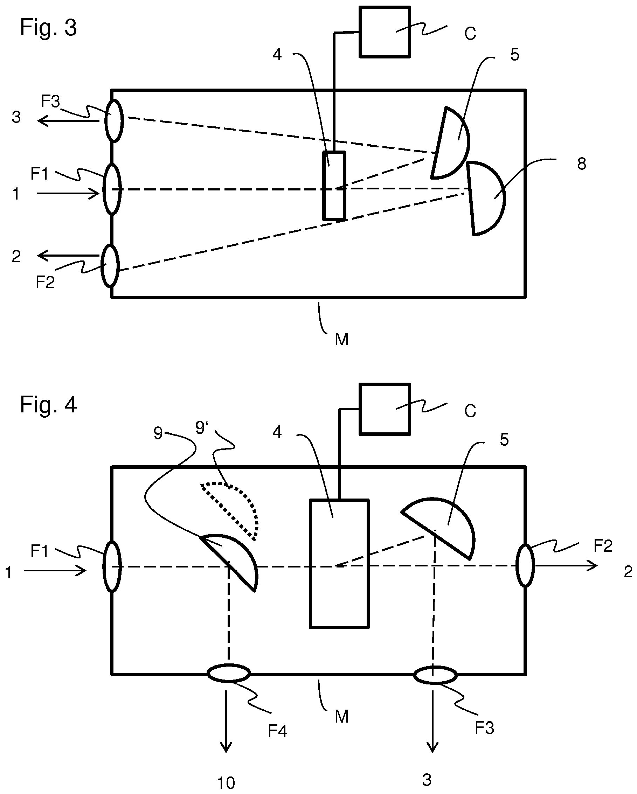

Fig. 3 shows a third embodiment of the light beam modulation unit M. The light beam modulation unit M contains a first 5 and a second deflection mirror 8. The first deflection mirror 5 deviates for example the 1^{st}-order diffracted beam, and the second deflection mirror 8 deviates the 0-order diffracted beam in order to guide the 0-order and the 1^{st}-order diffracted beams towards the respective first and second light outputs 2, 3.

Fig. 4 shows a fourth embodiment of the light beam modulation unit M, which is an alteration of the embodiment shown in Fig. 2. The light beam modulation unit M further comprises a retractable third mirror 9 and a third light output 10. The third mirror 9 can be inserted into a position in between the light entrance 1 and the acousto-optical modulator 4 to deflect the beam towards the third light output 10. In this case the light does not reach the acousto-optical modulator 4. The third mirror can also be retracted to a retracted position which is marked by the dotted lines and the reference sign 9'. In this case the third mirror 9 does not interfere the incident light beam and the beam passes from the light input 1 to the acousto-optical modulator 4 as described with Fig. 1-3. The insertion and retraction of the third mirror 9 is preferably controlled by the controller C.

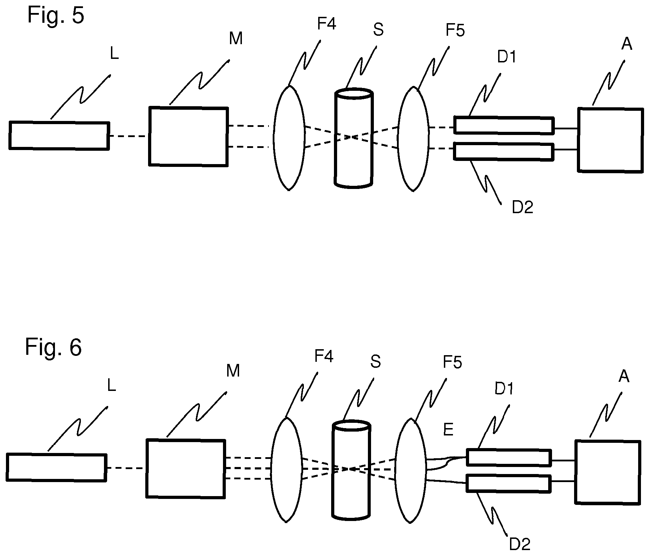

Fig. 5 shows a light scattering system. A laser L is used as single light source. The laser L emits a light beam, typically having a single wavelength and a single mode polarization. The light beam propagates towards the light beam modulation unit M. Optionally, the laser L and the light beam modulation unit M may be connected via optical fibers. As described above the light beam modulation unit M transforms the light beam into a 0-order and/or a 1^{st}-order diffracted beam. One of the diffracted beams exits the light beam modulation unit M through a first light output 2, the other through a second light output 3.

By controlling the light beam modulation unit M electronically with the controller C either a 0-order diffracted beam, or a 1^{st}-order diffracted beam, or a 0-order diffracted beam with a first intensity and a ^{st}-order diffracted beam with a second intensity may be generated and outputted. In another operation mode a 0-order diffracted beam and a 1^{st}-order diffracted beam are generated as alternating beams with a predetermined frequency, e.g. 5 MHz.

The 0-order and/or ^{st}-order diffracted beams propagate along the dotted line to a fourth light focusing device F4. With the fourth light focusing device F4 the beams are focused into a scattering cell S. In a circumference of the intersection area of the 0-order and the 1^{st}-order diffracted beam within a scattering cell the beams are scattered with different scattering vectors. The scattered light exits the scattering cell and propagates towards a fifth light focusing device F5 and further propagates towards a pair of detectors containing a first detector D1 and a second detector D2. The pair of detectors is arranged to detect from both diffracted beams scattered light with the same scattering vector.

In the shown example, one of the diffracted beams propagates after scattering in the scattering cell towards the detector D1 and the other of the diffracted beams propagates towards detector D2. In principle, the detector D1 and D2 also detect, for example, multiple scattering events created from the other of the diffracted beams having a different scattering vector. The detectors D1, D2 are preferably arranged on a moveable stage to be aligned for detecting specific scattering vectors.

The pair of detectors is connected with an analyzer A. The analyzer A receives a signal from each of the detectors D1, D2 and is able to perform an auto-correlation on a signal of one of the detectors or a cross-correlation on signals received from both of the detectors. The analyzer is further suitable to either perform a cross-correlation on a continuous signal received from both of the detectors or on alternating signals received from both of the detectors.

The described light scattering system is suitable to perform different measurements by controlling the acousto-optical modulator in the light beam modulation unit.

Fig. 6 shows a second embodiment of the light scattering system. In this embodiment a light beam modulation unit M with three light outputs as for example shown in Fig. 4 is included. The beam from the third light output shown in the middle of the first and the second light output can be as well focused into the scattering cell and by means of a third entrance for the pair of detectors, f. e. an optical fiber E, be detected by the pair of detectors. Instead of using a light beam modulation unit having a third light output it is as well feasible to couple to a second light beam modulation unit to one of the outputs of a first light modulation unit.

### List of Reference Signs

- 1: Light input
- 2: First light output
- 3: Second light output
- 4: Acousto-optical modulator
- 5: First deflection mirror
- 6: Filter
- 7: Beam power monitor
- 8: Second deflection mirror
- 9: Third deflection mirror
- 10: Third light output
- A: Analyzer
- C: Controller
- D1: First detector
- D2: Second detector
- E: Fiber
- F1: First light focusing device
- F2: Second light focusing device
- F3: Third light focusing device
- F4: Fourth light focusing device
- F5: Fifth light focusing device
- L: Laser
- M: Light beam modulation unit
- S: Scattering cell

## Claims

1. Light scattering system, comprising:
a single light source, wherein the light source is a laser (L),
a single light beam modulation unit (M) for a light scattering device comprising:
a single light input (1),
an acousto-optical modulator (4) for splitting a light beam received from the light input (1) into a 0-order diffracted and a 1^{st}-order diffracted beam, wherein the acousto-optical modulator (4) is arranged at a first distance from the light input (1),
wherein a first light output (2) is arranged at a first angle with respect to the incoming light beam and at a second distance along a first propagation path of the 0-order diffracted beam from the acousto-optical modulator (4),
wherein a second light output (3) is arranged at a second angle with respect to the incoming light beam and at a third distance along a second propagation path of the diffracted beam from the acousto-optical modulator (4),
and a controller (C) for controlling the acousto-optical modulator (4) such that a 0-order diffracted beam with a first intensity or a ^{st}-order diffracted beam with a second intensity is generated independently or that a 0-order diffracted beam with a first intensity and a ^{st}-order diffracted beam with a second intensity are generated as alternating beams or as simultaneous beams
wherein the light beam modulation unit (M) receives a light beam from the light source,
the light scattering system further comprising a scattering cell (S) for holding a sample, the scattering cell (S) receiving one or two of the diffracted beams from the single light beam modulation unit (M), a pair of detectors (D1, D2) to detect light scattered within the scattering cell (S),
wherein the pair of detectors (D1, D2) are arranged such, that one of the detectors (D1, D2) receives scattered light created by one of the diffracted beams with a certain scattering vector and the other detector (D1, D2) receives light created by the other of the diffracted beams with the same scattering vector, and
an analyzer (A) to receive a signal from each detector (D1, D2), wherein the analyzer (A) is suitable to perform an auto-correlation of a single signal or cross-correlation of a pair of signals,
wherein the analyzer (A) and the controller (C) are connected to each other for transmitting information including information regarding an operation mode of the light beam modulation unit (M) and/or information regarding a switching frequency between the diffracted beams.

2. Light scattering system according to claim 1, wherein the light beam modulation unit (M) further comprises a first deflection mirror (5) suitable and arranged to deflect one of the diffracted beams either to the first (2) or to the second light output (3),
wherein the first deflection mirror (5) is preferably selected from the following group: pick-off mirror, knife-edge mirror or D-shape mirror.

3. Light scattering system according to claim 2, wherein the first deflection mirror (5) and the acousto-optical modulator (4) are arranged and the acousto-optical modulator (4) is controlled in such a way,
that the 0-order diffracted beam is directed to the first light output (2) and
that the 1^{st}-order diffracted beam is deflected by the first deflection mirror (5) to the second light output (3).

4. Light scattering system according to one of claims 2 or 3, wherein the light beam modulation unit (M) further comprises a second deflection mirror (8) to deflect the other of the diffracted beams to the other light output.

5. Light scattering system according to one of the preceding claims, wherein the acousto-optical modulator (4) is suitable to generate alternating diffracted beams with a frequency of 1 Hz to 500 MHz, preferably with a frequency of 1 kHz to 50 MHz, preferably with a frequency of 100 kHz to 10 MHz.

6. Light scattering system according to one of the preceding claims, wherein the light input (1) comprises a first light focusing device (F1) having a first focal length, the first light output (2) comprises a second light focusing device (F2) having a second focal length, and the second light output (3) comprises a third light focusing device (F3) having a third focal length, wherein the first distance is about the first focal length, the second distance is about the second focal length, and the third distance is about the third focal length.

7. Light scattering system according to one of the preceding claims, wherein the light input (1) comprises a first optical fiber and a first light focusing device (F1) having a first focal length and focusing into the first optical fiber,
the first light output (2) comprises a second optical fiber and a second light focusing device (F2) having a second focal length and focusing into the second optical fiber, and
the second light output (3) comprises a third optical fiber and a third light focusing device (F3) having a third focal length focusing into the third optical fiber.

8. Light scattering system according to one of the preceding claims, wherein the incoming light beam is a laser beam of a wavelength between 300 and 800 nm, preferably between 500 and 800 nm.

9. Light scattering system according to one of the preceding claims, wherein a filter wheel (6) is positioned between the light input (1) and the acousto-optical modulator (4), to filter and attenuate the incoming light beam.

10. Light scattering system according to one of the preceding claims, wherein a device for monitoring the beam power (7) is positioned between the light input (1) and the acousto-optical modulator (4) to monitor the beam power of the incoming light beam.

11. Light scattering system according to one of the preceding claims, wherein the first, second and third focal length are equal.

12. Light scattering system according to one of the preceding claims, further comprising retractable mirror 9 and a third light output, (10) wherein the retractable mirror is suitable to be moved to an inserted position between the light input (1) and the acousto-optical modulator (4), where the retractable mirror deflects the light beam to the third light output, and a retracted position, where the retractable mirror does not intersect the light beam.

13. Light scattering system according to one of the preceding claims, wherein the light source is coupled by a first optical fiber to the light beam modulation unit (M), the first light output (2) is coupled by a second optical fiber to the scattering cell (S), and the second light output (3) is coupled by a third optical fiber to the scattering cell (S).

14. Light scattering system according to one of the preceding claims, wherein the light beam modulation unit (M) is controllable to generate and emit only the 0-order diffracted beam to the scattering cell (S).

15. Light scattering system according to one of the preceding claims, wherein the light beam modulation unit (M) is controllable to generate and emit the 0-order diffracted beam and the 1^{st}-order diffracted beam with equal intensity.

16. Light scattering system according to one of the preceding claims, wherein the light beam modulation unit (M) is controllable to create and emit alternately the 0-order diffracted beam and the 1^{st}-order diffracted beam with a frequency of 1 Hz to 500 MHz, preferably with a frequency of 1 kHz to 50 MHz, preferably with a frequency of 100 kHz to 10 MHz.

## Patentansprüche

1. Lichtstreuungssystem, umfassend:
eine Einzellichtquelle, wobei die Lichtquelle ein Laser (L) ist,
eine Einzellichtstrahl-Modulationseinheit (M) für eine Lichtstreuungsvorrichtung, umfassend:
einen Einzellichteingang (1),
einen akustooptischen Modulator (4) zum Aufspalten eines von dem Lichteingang (1) empfangenen Lichtstrahls in einen gebeugten Strahl 0. Ordnung und einen 1. Ordnung gebeugten Strahl, wobei der akustooptische Modulator (4) in einem ersten Abstand von dem Lichteingang (1) angeordnet ist,
wobei ein erster Lichtausgang (2) in einem ersten Winkel in Bezug auf den eingehenden Lichtstrahl und in einem zweiten Abstand entlang eines ersten Ausbreitungspfads des gebeugten Strahls 0. Ordnung von dem akustooptischen Modulator (4) angeordnet ist,
wobei ein zweiter Lichtausgang (3) in einem zweiten Winkel in Bezug auf den eingehenden Lichtstrahl und in einem dritten Abstand entlang eines zweiten Ausbreitungspfads des gebeugten Strahls von dem akustooptischen Modulator (4) angeordnet ist,
und eine Steuerung (C) zum Steuern des akustooptischen Modulators (4), so dass ein gebeugter Strahl 0. Ordnung mit einer ersten Intensität oder ein gebeugter Strahl 1. Ordnung mit einer zweiten Intensität unabhängig generiert wird, oder dass ein gebeugter Strahl 0. Ordnung mit einer ersten Intensität und ein gebeugter Strahl 1. Ordnung mit einer zweiten Intensität als alternierende Strahle oder als simultane Strahle generiert werden,
wobei die Lichtstrahl-Modulationseinheit (M) einen Lichtstrahl von der Lichtquelle empfängt,
das Lichtstreuungssystem des Weiteren eine Streuungszelle (S) zum Halten einer Probe umfasst, wobei die Streuungszelle (S) einen oder zwei der gebeugten Strahle aus der Einzellichtstrahl-Modulationseinheit (M) empfängt,
ein Paar Detektoren (D1, D2), um innerhalb der Streuungszelle (S) gestreutes Licht zu detektieren, wobei das Paar von Detektoren (D1, D2) so angeordnet ist, dass einer der Detektoren (D1, D2) gestreutes Licht empfängt, das durch einen der gebeugten Strahle mit einem bestimmten Streuungsvektor erzeugt wurde, und der andere Detektor (D1, D2) Licht empfängt, das durch den anderen der gebeugten Strahle mit demselben Streuungsvektor erzeugt wurde, und
einen Analysator (A), um ein Signal von jedem Detektor (D1, D2) zu empfangen, wobei der Analysator (A) geeignet ist, um eine Autokorrelation eines Einzelsignals oder Kreuzkorrelation eines Paares von Signalen durchzuführen,
wobei der Analysator (A) und die Steuerung (C) miteinander verbunden sind, um Informationen zu übermitteln, die Informationen hinsichtlich eines Betriebsmodus der Lichtstrahl-Modulationseinheit (M) und/oder Informationen hinsichtlich einer Schaltfrequenz zwischen den gebeugten Strahlen einschließen.

2. Lichtstreuungssystem nach Anspruch 1, wobei die Lichtstrahl-Modulationseinheit (M) des Weiteren einen ersten Umlenkspiegel (5) umfasst, der geeignet und angeordnet ist, um einen der gebeugten Strahle entweder zu dem ersten (2) oder dem zweiten Lichtausgang (3) umzulenken,
wobei der erste Umlenkspiegel (5) vorzugsweise ausgewählt ist aus der folgenden Gruppe: Abgriffspiegel, scharfkantiger (Knife-Edge) Spiegel und D-förmiger Spiegel.

3. Lichtstreuungssystem nach Anspruch 2, wobei der erste Umlenkspiegel (5) und der akustooptische Modulator (4) in einer solchen Weise angeordnet sind und der akustooptische Modulator (4) in einer solchen Weise gesteuert wird,
dass der gebeugte Strahl 0. Ordnung zu dem ersten Lichtausgang (2) gelenkt wird, und
dass der gebeugte Strahl 1. Ordnung durch den ersten Umlenkspiegel (5) zu dem zweiten Lichtausgang (3) umgelenkt wird.

4. Lichtstreuungssystem nach einem der Ansprüche 2 oder 3, wobei die Lichtstrahl-Modulationseinheit (M) des Weiteren einen zweiten Umlenkspiegel (8) umfasst, um den anderen der gebeugten Strahle auf den anderen Lichtausgang umzulenken.

5. Lichtstreuungssystem nach einem der vorhergehenden Ansprüche, wobei der akustooptische Modulator (4) geeignet ist, um alternierende gebeugte Strahle mit einer Frequenz von 1 Hz bis 500 MHz, vorzugsweise mit einer Frequenz von 1 kHz bis 50 MHz, vorzugsweise mit einer Frequenz von 100 kHz bis 10 MHz zu generieren.

6. Lichtstreuungssystem nach einem der vorhergehenden Ansprüche, wobei der Lichteingang (1) eine erste Lichtfokussiervorrichtung (F1) mit einer ersten Brennweite umfasst, der erste Lichtausgang (2) eine zweite Lichtfokussiervorrichtung mit einer zweiten Brennweite umfasst, und der zweite Lichtausgang (3) eine dritte Lichtfokussiervorrichtung (F3) mit einer dritten Brennweite umfasst, wobei der erste Abstand etwa der ersten Brennweite entspricht, der zweite Abstand etwa der zweiten Brennweite entspricht, und der dritte Abstand etwa der dritten Brennweite entspricht.

7. Lichtstreuungssystem nach einem der vorhergehenden Ansprüche, wobei der Lichteingang (1) eine erste Lichtleiterfaser und eine erste Lichtfokussiervorrichtung (F1) mit einer ersten Brennweite umfasst, und in die erste Lichtleiterfaser fokussiert,
der erste Lichtausgang (2) eine zweite Lichtleiterfaser und eine zweite Lichtfokussiervorrichtung (F2) mit einer zweiten Brennweite umfasst und in die zweite Lichtleiterfaser fokussiert, und
der zweite Lichtausgang (3) eine dritte Lichtleiterfaser und eine dritte Lichtfokussiervorrichtung (F3) mit einer dritten Brennweite umfasst und in die dritte Lichtleiterfaser fokussiert.

8. Lichtstreuungssystem nach einem der vorhergehenden Ansprüche, wobei der eingehende Lichtstrahl ein Laserstrahl mit einer Wellenlänge zwischen 300 und 800 nm ist, vorzugsweise zwischen 500 und 800 nm.

9. Lichtstreuungssystem nach einem der vorhergehenden Ansprüche, wobei ein Filterrad (6) zwischen dem Lichteingang (1) und dem akustooptischen Modulator (4) positioniert ist, um den eingehenden Lichtstrahl zu filtern und abzuschwächen.

10. Lichtstreuungssystem nach einem der vorhergehenden Ansprüche, wobei eine Vorrichtung zum Überwachen der Strahlleistung (7) zwischen dem Lichteingang (1) und dem akustooptischen Modulator (4) positioniert ist, um die Strahlleistung des eingehenden Lichtstrahls zu überwachen.

11. Lichtstreuungssystem nach einem der vorhergehenden Ansprüche, wobei die erste, zweite und dritte Brennweite gleich sind.

12. Lichtstreuungssystem nach einem der vorhergehenden Ansprüche, des Weiteren umfassend einen rückziehbaren Spiegel (9) und einen dritten Lichtausgang (10), wobei der rückziehbare Spiegel geeignet ist, um zu einer eingeführten Position zwischen dem Lichteingang (1) und dem akustooptischen Modulator (4), wo der rückziehbare Spiegel den Lichtstrahl auf den dritten Lichtausgang umlenkt, und einer rückgezogenen Position, wo der rückziehbare Spiegel den Lichtstrahl nicht kreuzt, bewegt zu werden.

13. Lichtstreuungssystem nach einem der vorhergehenden Ansprüche, wobei die Lichtquelle mittels einer ersten Lichtleiterfaser an die Lichtstrahl-Modulationseinheit (M) gekoppelt ist, der erste Lichtausgang (2) durch eine zweite optische Faser an die Streuungszelle (S) gekoppelt ist, und der zweite Lichtausgang (3) durch eine dritte optische Faser an die Streuungszelle (S) gekoppelt ist.

14. Lichtstreuungsvorrichtung nach einem der vorhergehenden Ansprüche, wobei die Lichtstrahl-Modulationseinheit (M) steuerbar ist, um nur den gebeugten Strahl 0. Ordnung zu generieren und an die Streuungszelle (S) zu emittieren.

15. Lichtstreuungsvorrichtung nach einem der vorhergehenden Ansprüche, wobei die Lichtstrahl-Modulationseinheit (M) steuerbar ist, um den gebeugten Strahl 0. Ordnung und den gebeugten Strahl 1. Ordnung mit gleicher Intensität zu generieren und zu emittieren.

16. Lichtstreuungssystem nach einem der vorhergehenden Ansprüche, wobei die Lichtstrahl-Modulationseinheit (M) steuerbar ist, um alternierend den gebeugten Strahl 0. Ordnung und den gebeugten Strahl 1. Ordnung mit einer Frequenz von 1 Hz bis 500 MHz, vorzugsweise mit einer Frequenz von 1 kHz bis 50 MHz, vorzugsweise mit einer Frequenz von 100 kHz bis 10 MHz zu erzeugen und zu emittieren.

## Revendications

1. Système de diffusion de lumière, comprenant :
une source de lumière unique, la source de lumière étant un laser (L),
une unité de modulation de faisceau lumineux unique (M) pour un dispositif de diffusion de lumière comprenant :
une entrée de lumière unique (1),
un modulateur acousto-optique (4) pour diviser un faisceau lumineux reçu de l'entrée de lumière (1) en un faisceau diffracté d'ordre 0 et un faisceau diffracté d'ordre 1, le modulateur acousto-optique (4) étant agencé à une première distance de l'entrée de lumière (1),
une première sortie de lumière (2) étant agencée selon un premier angle par rapport au faisceau lumineux entrant et à une seconde distance le long d'un premier trajet de propagation du faisceau diffracté d'ordre 0 provenant du modulateur acousto-optique (4),
une deuxième sortie de lumière (3) étant agencée à un deuxième angle par rapport au faisceau lumineux entrant et à une troisième distance le long d'un deuxième trajet de propagation du faisceau diffracté par le modulateur acousto-optique (4),
et un dispositif de commande (C) pour commander le modulateur acousto-optique (4) de telle sorte qu'un faisceau diffracté d'ordre 0 avec une première intensité ou un faisceau diffracté d'ordre 1 avec une deuxième intensité soit généré indépendamment ou qu'un faisceau diffracté d'ordre 0 avec une première intensité et un faisceau diffracté d'ordre 1 avec une deuxième intensité soient générés comme des faisceaux alternés ou comme des faisceaux simultanés
l'unité de modulation de faisceau lumineux (M) recevant un faisceau lumineux de la source de lumière,
le système de diffusion de lumière comprenant en outre
une cellule de diffusion (S) pour contenir un échantillon, la cellule de diffusion (S) recevant un ou deux des faisceaux diffractés provenant de l'unité de modulation de faisceau lumineux unique (M),
une paire de détecteurs (D1, D2) pour détecter la lumière diffusée à l'intérieur de la cellule de diffusion (S), la paire de détecteurs (D1, D2) étant agencée de telle sorte que l'un des détecteurs (D1, D2) reçoit la lumière diffusée créée par l'un des faisceaux diffractés avec un certain vecteur de diffusion et l'autre détecteur (D1, D2) reçoit la lumière créée par l'autre des faisceaux diffractés avec le même vecteur de diffusion, et
un analyseur (A) pour recevoir un signal de chaque détecteur (D1, D2), l'analyseur (A) étant adapté pour effectuer une autocorrélation d'un seul signal ou une corrélation croisée d'une paire de signaux,
l'analyseur (A) et le dispositif de commande (C) étant connectés l'un à l'autre pour transmettre des informations, comprenant des informations concernant un mode de fonctionnement de l'unité de modulation de faisceau lumineux (M) et/ou des informations concernant une fréquence de commutation entre les faisceaux diffractés.

2. Système de diffusion de lumière selon la revendication 1, l'unité de modulation de faisceau lumineux (M) comprenant en outre un premier miroir de déviation (5) approprié et agencé pour dévier l'un des faisceaux diffractés soit vers la première (2) soit vers la deuxième sortie de lumière (3),
le premier miroir de déviation (5) étant de préférence choisi dans le groupe suivant : miroir capteur, miroir à bord coupé ou miroir en forme de D.

3. Système de diffusion de lumière selon la revendication 2, le premier miroir de déviation (5) et le modulateur acousto-optique (4) étant agencés et le modulateur acousto-optique (4) étant commandé de telle manière que le faisceau diffracté d'ordre 0 est dirigé vers la première sortie de lumière (2) et
que le faisceau diffracté d'ordre 1 est dévié par le premier miroir de déviation (5) vers la seconde sortie de lumière (3).

4. Système de diffusion de lumière selon l'une des revendications 2 et 3, l'unité de modulation de faisceau lumineux (M) comprenant en outre un deuxième miroir de déviation (8) pour dévier l'autre des faisceaux diffractés vers l'autre sortie de lumière.

5. Système de diffusion de lumière selon l'une des revendications précédentes, le modulateur acousto-optique (4) étant approprié pour générer des faisceaux diffractés alternés avec une fréquence de 1 Hz à 500 MHz, de préférence avec une fréquence de 1 kHz à 50 MHz, de préférence avec une fréquence de 100 kHz à 10 MHz.

6. Système de diffusion de lumière selon l'une des revendications précédentes, l'entrée de lumière (1) comprenant un premier dispositif de focalisation de lumière (F1) ayant une première longueur focale, la première sortie de lumière (2) comprenant un deuxième dispositif de focalisation de lumière (F2) ayant une deuxième longueur focale, et la deuxième sortie de lumière (3) comprenant un troisième dispositif de focalisation de lumière (F3) ayant une troisième longueur focale, la première distance étant environ la première longueur focale, la deuxième distance étant environ la deuxième longueur focale, et la troisième distance étant environ la troisième longueur focale.

7. Système de diffusion de lumière selon l'une des revendications précédentes, l'entrée de lumière (1) comprenant une première fibre optique et un premier dispositif de focalisation de lumière (F1) ayant une première longueur focale et focalisant dans la première fibre optique,
la première sortie de lumière (2) comprenant une deuxième fibre optique et un deuxième dispositif de focalisation de lumière (F2) ayant une deuxième longueur focale et focalisant dans la deuxième fibre optique, et
la deuxième sortie de lumière (3) comprenant une troisième fibre optique et un troisième dispositif de focalisation de lumière (F3) ayant une troisième longueur focale focalisant dans la troisième fibre optique.

8. Système de diffusion de lumière selon l'une des revendications précédentes, le faisceau lumineux entrant étant un faisceau laser d'une longueur d'onde comprise entre 300 et 800 nm, de préférence entre 500 et 800 nm.

9. Système de diffusion de lumière selon l'une des revendications précédentes, une roue de filtrage (6) étant positionnée entre l'entrée de lumière (1) et le modulateur acousto-optique (4), pour filtrer et atténuer le faisceau lumineux entrant.

10. Système de diffusion de lumière selon l'une des revendications précédentes, un dispositif de surveillance de la puissance du faisceau (7) étant positionné entre l'entrée de lumière (1) et le modulateur acousto-optique (4) pour surveiller la puissance du faisceau lumineux entrant.

11. Système de diffusion de lumière selon l'une des revendications précédentes, les première, deuxième et troisième longueurs focales étant égales.

12. Système de diffusion de lumière selon l'une des revendications précédentes, comprenant en outre un miroir rétractable (9) et une troisième sortie de lumière (10), le miroir rétractable étant adapté pour être déplacé vers une position insérée entre l'entrée de lumière (1) et le modulateur acousto-optique (4), où le miroir rétractable dévie le faisceau lumineux vers la troisième sortie de lumière, et une position rétractée, où le miroir rétractable ne coupe pas le faisceau lumineux.

13. Système de diffusion de lumière selon l'une des revendications précédentes, la source de lumière étant couplée par une première fibre optique à l'unité de modulation de faisceau lumineux (M), la première sortie de lumière (2) étant couplée par une deuxième fibre optique à la cellule de diffusion (S), et la deuxième sortie de lumière (3) étant couplée par une troisième fibre optique à la cellule de diffusion (S).

14. Système de diffusion de lumière selon l'une des revendications précédentes, l'unité de modulation de faisceau lumineux (M) pouvant être commandée pour générer et émettre uniquement le faisceau diffracté d'ordre 0 vers la cellule de diffusion (S).

15. Système de diffusion de lumière selon l'une des revendications précédentes, l'unité de modulation de faisceau lumineux (M) pouvant être commandée pour générer et émettre le faisceau diffracté d'ordre 0 et le faisceau diffracté d'ordre 1 avec une intensité égale.

16. Système de diffusion de lumière selon l'une des revendications précédentes, l'unité de modulation de faisceau lumineux (M) pouvant être commandée pour créer et émettre alternativement le faisceau diffracté d'ordre 0 et le faisceau diffracté d'ordre 1 avec une fréquence de 1 Hz à 500 MHz, de préférence avec une fréquence de 1 kHz à 50 MHz, de préférence avec une fréquence de 100 kHz à 10 MHz.
